(19) Europäisches Patentamt / European Patent Office / Office européen des brevets

(11) **EP 4 465 023 A1**

(12) **EUROPEAN PATENT APPLICATION**

(43) Date of publication:
**20.11.2024 Bulletin 2024/47**

(21) Application number: **24174489.5**

(22) Date of filing: **07.05.2024**

(51) International Patent Classification (IPC):
*G01N 21/84* (2006.01)

(52) Cooperative Patent Classification (CPC):
**G01N 21/8483**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.05.2023 JP 2023078865
17.04.2024 JP 2024067026**

(71) Applicant: **ARKRAY, Inc.
Kyoto-shi, Kyoto 601-8045 (JP)**

(72) Inventors:
• **Hiramura, Fumito
Kyoto-shi, Kyoto, 602-0008 (JP)**
• **Odagaki, Toru
Kyoto-shi, Kyoto, 602-0008 (JP)**

(74) Representative: **Hoffmann Eitle
Patent- und Rechtsanwälte PartmbB
Arabellastraße 30
81925 München (DE)**

(54) **MEASUREMENT METHOD AND MEASUREMENT SYSTEM**

(57) A measurement method including: photographing a pre-measurement image in a state in which a test piece (60) is irradiated with measurement light in a measurement region (61) of the test piece (60) before the sample is introduced; measuring luminescence intensity for each of plural measurement sites in the photographed pre-measurement image; specifying an arithmetic value that equalizes the luminescence intensity of each measurement site in the pre-measurement image for each measurement site; photographing a measurement image in a state in which the measurement region (61) of the test piece (60) after the sample is introduced is irradiated with the measurement light; measuring luminescence intensity for each measurement site corresponding to each measurement site of the pre-measurement image in the photographed measurement image; and correcting the luminescence intensity of each measurement site in the measurement image with the arithmetic value of the measurement site.

FIG.16

## Description

## BACKGROUND

Technical Field

The present invention relates to a measurement method and a measurement system for correcting light quantity unevenness related to measurement of a measurement object.

Related Art

In a measurement system that detects a reaction between a measurement object in a sample and a reaction reagent by luminescence intensity using a test piece to which the reaction reagent is applied, a measurement region of the test piece is not always uniformly irradiated with measurement light. For this reason, various attempts have been made to uniformly irradiate the measurement region of the test piece or correct unevenness in the quantity of irradiated light.

In a technique described in WO 2002/039094 A1, in measurement by an image sensor, distribution correction of incident light and correction of light quantity unevenness that equalizes a measurement result of a reference substance are performed. In a technique described in Japanese Patent Application Laid-Open (JP-A) No. 2014-190926, accuracy control is performed using a dedicated inspection test piece in order to periodically inspect whether or not illuminance by an illumination device is sufficient, whether or not sensitivity of a photographing element in a photographing device is deteriorated, and the like. A technique described in JP-A No. H7-332935 discloses that light quantity distribution in a turned-on state is corrected based on light quantity distribution and correction light quantity distribution in a turned-off state.

In techniques described in Japanese National-Phase Publication (JP-A) No. 2022-506376 and Japanese National-Phase Publication (JP-A) No. 2023-503863, a technique is disclosed in which both an optical test strip before a sample is applied and an optical test strip after the sample is applied are photographed by a camera of a smartphone, and images before and after the application are analyzed. That is, Japanese National-Phase Publication (JP-A) No. 2022-506376 discloses a technique for comparing intensities of images before and after application and coping with a case in which a surrounding illumination condition changes with time, and Japanese National-Phase Publication (JP-A) No. 2023-503863 aims to equalize photographing positions from the images before and after application.

## SUMMARY

An exemplary embodiment of the present disclosure provides a measurement method and a measurement system for correcting light quantity unevenness related to measurement of a measurement object with simple components.

Solution to Problem

A measurement method according to an aspect of the disclosure includes: photographing a pre-measurement image in a state in which a test piece, to which a reaction reagent is applied and to which a sample including a measurement object that reacts with the reaction reagent is introduced, is irradiated with measurement light in a measurement region of the test piece before the sample is introduced; measuring luminescence intensity for each of plural measurement sites in the photographed pre-measurement image; specifying an arithmetic value that equalizes the luminescence intensity of each measurement site in the pre-measurement image for each measurement site; photographing a measurement image in a state in which the measurement region of the test piece after the sample is introduced is irradiated with the measurement light; measuring luminescence intensity for each measurement site corresponding to each measurement site of the pre-measurement image in the photographed measurement image; and correcting the luminescence intensity of each measurement site in the measurement image with the arithmetic value of the measurement site.

One aspect of the disclosure is a measurement system in which a test piece, to which a reaction reagent is applied and to which a sample including a measurement object that reacts with the reaction reagent is introduced, is disposed in a measurement region inside the measurement system and the test piece is measured, the measurement system including: a light source configured to irradiate the measurement region of the test piece disposed in the measurement region with measurement light; a photographing unit configured to photograph an image of the measurement region of the test piece; and an analysis unit configured to analyze the image photographed by the photographing unit, in which the photographing unit acquires a pre-measurement image by photographing the measurement region of the test piece before the sample is introduced in a state in which the measurement region is irradiated with the measurement light from the light source, and acquires a measurement image by photographing the measurement region of the test piece after the sample is introduced in a state in which the measurement region is irradiated with the measurement light from the light source, and the analysis unit specifies, for each of plural measurement sites in the pre-measurement image, an arithmetic value that equalizes luminescence intensity of each measurement site, and corrects luminescence intensity for each measurement site in the measurement image corresponding to each measurement site in the pre-measurement image based on the arithmetic value.

According to the exemplary embodiment of the disclosure, a measurement method and a measurement system for correcting light quantity unevenness related to measurement of a measurement object with simple components are provided.

BRIEF DESCRIPTION OF THE DRAWINGS

Exemplary embodiments will be described in detail based on the following figures, wherein:

Fig. 1 is an upper perspective view illustrating a holding unit used in an exemplary embodiment;
Fig. 2 is an enlarged lower perspective view illustrating a vicinity of an insertion port of the holding unit;
Fig. 3 is a plan view of a test piece used in the exemplary embodiment;
Fig. 4 is an upper perspective view illustrating a state in which a test piece is attached to the holding unit;
Fig. 5 illustrates the state of Fig. 4 in plan view;
Fig. 6 is an upper perspective view illustrating a placement portion used in the exemplary embodiment;
Fig. 7 illustrates the placement portion in a bottom view;
Fig. 8 is an upper perspective view illustrating a housing of the exemplary embodiment;
Fig. 9 is an upper perspective view illustrating a state in which a test piece is attached to the housing of Fig. 8;
Fig. 10 illustrates a mobile device used in the exemplary embodiment in a bottom view;
Fig. 11 is an upper perspective view illustrating a measurement system of the exemplary embodiment;
Fig. 12 is an upper perspective view illustrating a state in which a part of an outer wall portion is removed from the measurement system of Fig. 11;
Fig. 13 is a cross-sectional view taken along line XIII-XIII of Fig. 12;
Fig. 14 is a functional block diagram of the measurement system of the exemplary embodiment;
Fig. 15 is a block diagram illustrating a control unit;
Fig. 16 is a flowchart illustrating an outline of a measurement method of a measurement object in the measurement system of the exemplary embodiment;
Fig. 17 is a flowchart illustrating an outline of coefficient calculation;
Fig. 18 is a flowchart illustrating an outline of coefficient correction;
Fig. 19 is an example of a pre-measurement image;
Fig. 20 is an example of a measurement image;
Fig. 21 is a graph illustrating an example of luminescence intensity before correction in the pre-measurement image and the measurement image; and
Fig. 22 is a graph illustrating an example of corrected luminescence intensity in the measurement image.

DETAILED DESCRIPTION

Hereinafter, an exemplary embodiment of the disclosure will be described with reference to the drawings. The same reference numerals in the drawings indicate the same portions without any particular description. Moreover, each member and each site illustrated in each drawing are merely schematically drawn, and the size and positional relationship of the actual product are not necessarily accurately expressed.

(1) Holding Unit

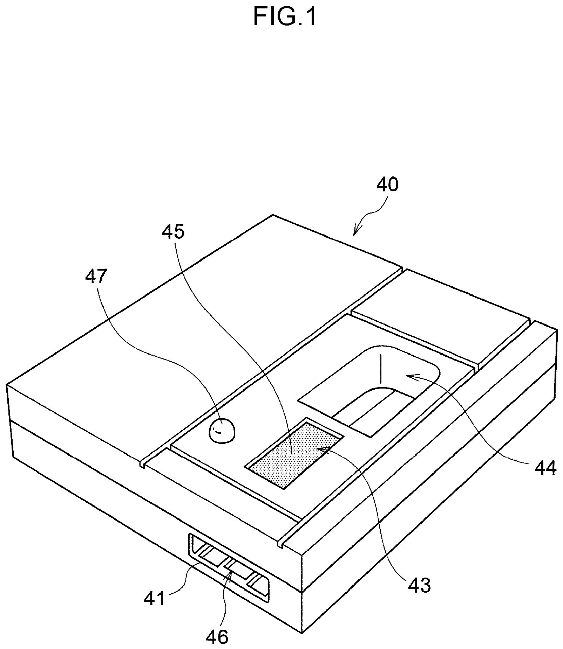

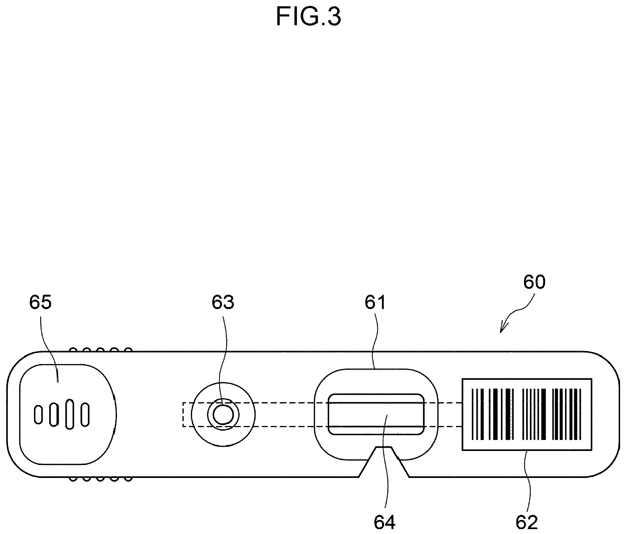

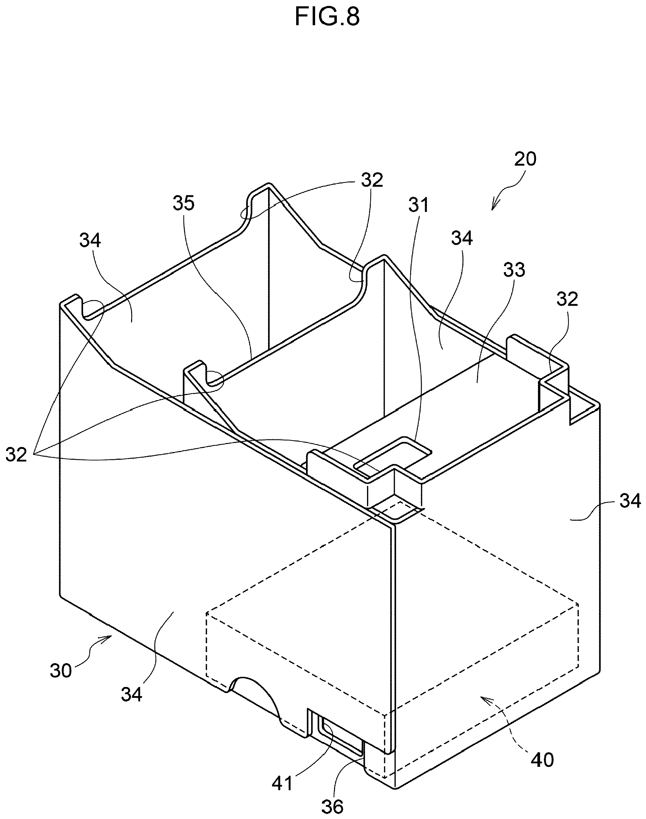

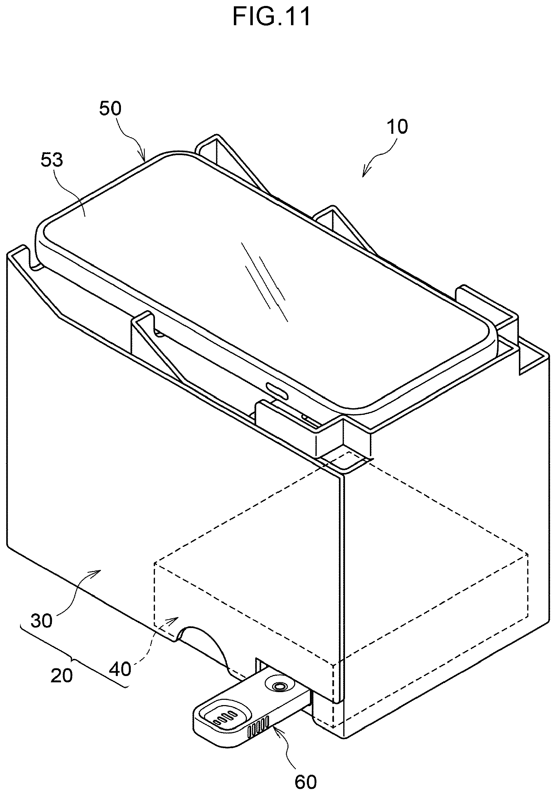

Fig. 1 is an upper perspective view illustrating a holding unit 40 used in a measurement system 10 (see Fig. 11) of the present exemplary embodiment. In the measurement system 10 of the disclosure, the holding unit 40 as illustrated in Fig. 1 may be included as a member configuring a housing 20 (see Fig. 8). The holding unit 40 has a box shape, and two openings of a measurement opening 43 and an identification opening 44 are formed on an upper surface. An optical filter 45 is fitted into the measurement opening 43. The upper surface is further provided with a sensor 47 that senses light. An insertion port 41 into which a test piece 60 (see Fig. 3) to be described later is inserted is opened in a side surface of the holding unit 40. An internal space of the insertion port 41 communicates with the measurement opening 43 and the identification opening 44, and is an accommodation portion 46 that is a space in which a part of the test piece 60 is accommodated.

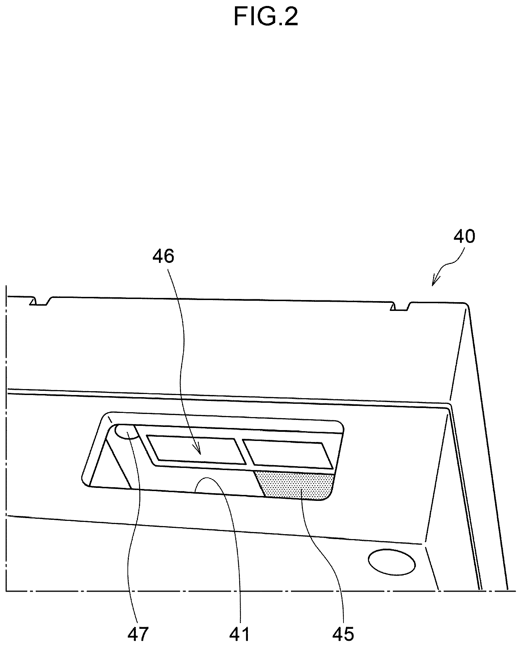

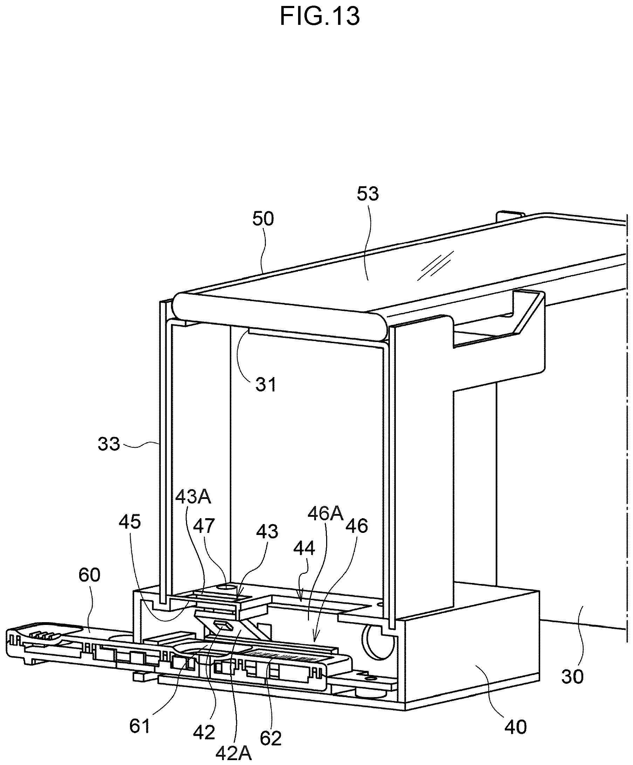

Fig. 2 is an enlarged lower perspective view of the vicinity of the insertion port 41 of the holding unit 40. The sensor 47 is provided in the vicinity of the measurement opening 43 in the accommodation portion 46 which is an internal space of the insertion port 41. A light source 42 (see Fig. 13) provided inside the accommodation portion 46 emits light including a light beam having a wavelength suitable for photographing a measurement region 61. Then, the optical filter 45 has an optical characteristic of suitably transmitting only a light beam having a wavelength suitable for the photographing.

(2) Test Piece

Fig. 3 illustrates the test piece 60 used in the measurement system 10 (see Fig. 11) of the present exemplary embodiment in plan view. The test piece 60 has a flat rod-like outer shape. A grip portion 65 whose upper surface side is recessed is formed at one end of the test piece 60, and the test piece 60 can be gripped with fingers by holding the grip portion. A test sheet 64 having an elongated shape along a longitudinal direction of the test piece 60 is accommodated in the test piece 60. The test sheet 64 is exposed upward at two openings formed on the upper surface of the test piece 60. Among these two openings, one closer to the grip portion 65 is a sample spotting portion 63, and one farther from the grip portion 65 is the measurement region 61 where the measurement of the measurement object is performed. Further, an identification region 62 in which information related to the test piece 60 is recorded is formed on the other end side of the test piece 60, that is, on the upper surface of the place farthest from the grip portion 65. Hereinafter, with respect to the test piece 60, a side close to the grip portion 65 is referred to as an "upstream side", and a side close to the identification region 62 is referred to as a "downstream side".

The test sheet 64 is a water absorbent such as a filter sheet or one obtained by applying a water absorbing layer to the surface of a synthetic resin substrate. A reaction reagent that reacts with the measurement object to develop color is applied to the test sheet 64. A sample assumed to contain a measurement object is spotted to the sample spotting portion 63. Examples of the sample include a liquid specimen collected from a living body, for example, blood or urine, or a diluent obtained by diluting these with an appropriate solvent, or a solid or mucus collected from a living body, or a liquid specimen obtained by diluting or suspending these in an appropriate solvent. Examples of the measurement object include a component included in the liquid specimen, or an antigen derived from an exogenous microorganism or virus.

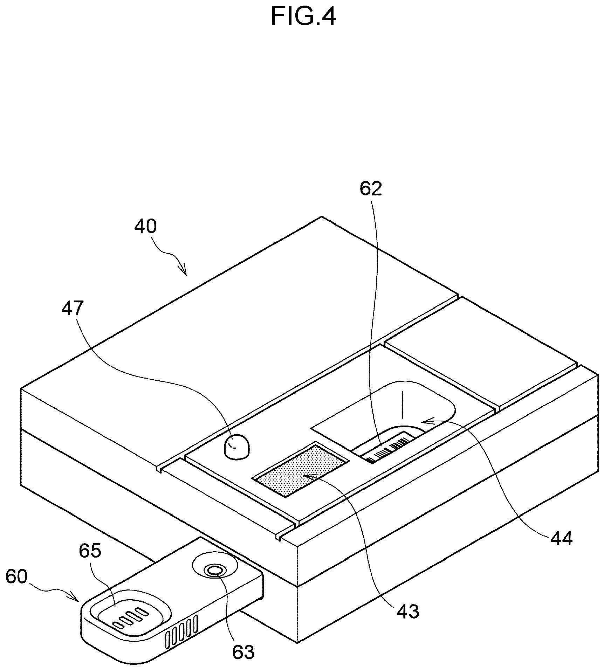

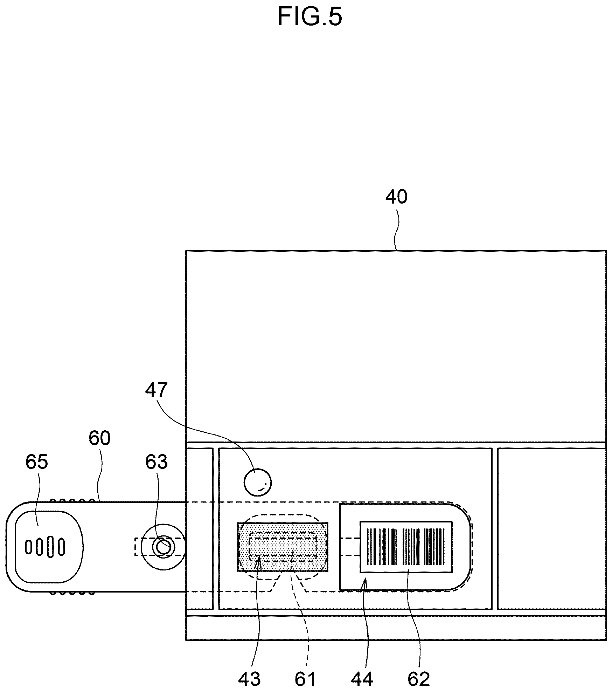

Fig. 4 is an upper perspective view illustrating a state in which the test piece 60 is attached to the holding unit 40. Moreover, Fig. 5 illustrates this state in plan view. As illustrated in Fig. 4 and Fig. 5, the test piece 60 is inserted into the accommodation portion 46 from the insertion port 41 with the downstream side first. In this state, as illustrated in Fig. 5, the measurement region 61 is at the same plane position as the measurement opening 43, and the identification region 62 is at the same plane position as the identification opening 44.

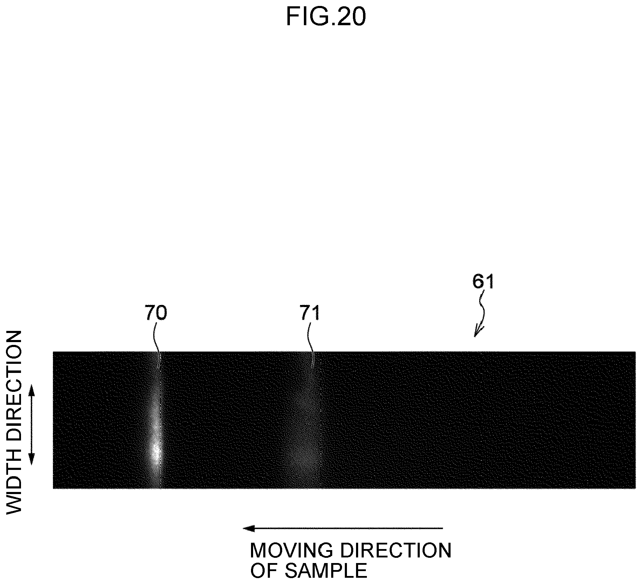

In this state, when the sample is spotted to the sample spotting portion 63, the sample flows through the test sheet 64 in a moving direction of the sample illustrated in Fig. 20 by the capillary phenomenon, and a control reaction zone 70 (see Fig. 20) indicating spotting of the sample is generated on the downstream side in the measurement region 61. Further, when the sample includes a measurement object, a target reaction zone 71 (see Fig. 20) having a strength corresponding to the concentration is generated on the upstream side. In the test sheet 64, the target reaction zone 71 is located at the central portion in the measurement region, and the control reaction zone 70 is located on the downstream side outside the central portion. That is, in the positional relationship with the light source 42, the target reaction zone 71 is located close to the light source 42, and the control reaction zone 70 is located far from the light source 42. The measurement system 10 of the present exemplary embodiment measures the concentration of the measurement object by irradiating the target reaction zone 71 with light emitted from the light source 42 and measuring the intensity of the generated light. In the identification region 62 described above, for example, identification information, which is information related to the test piece 60, such as what type of the test sheet 64 is accommodated in the test piece 60, is recorded. Examples of the identification information include a barcode, a QR code (registered trademark), and the like.

(3) Placement Portion

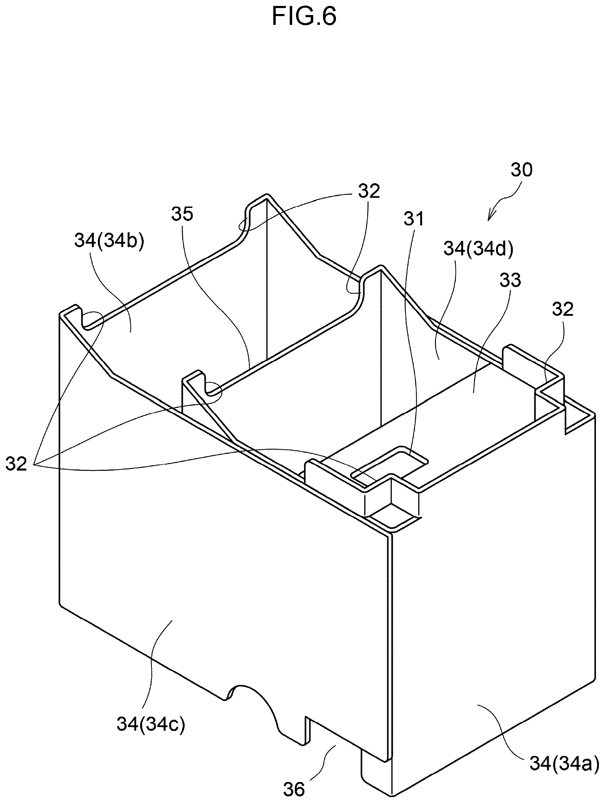

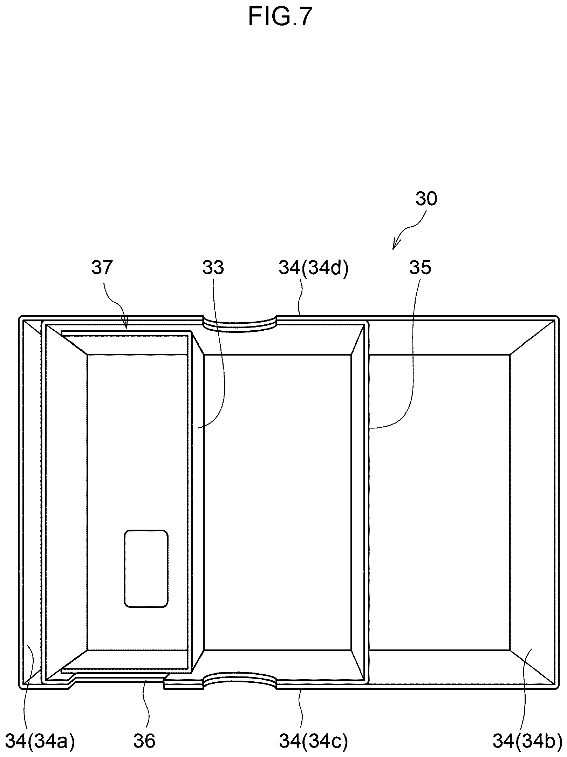

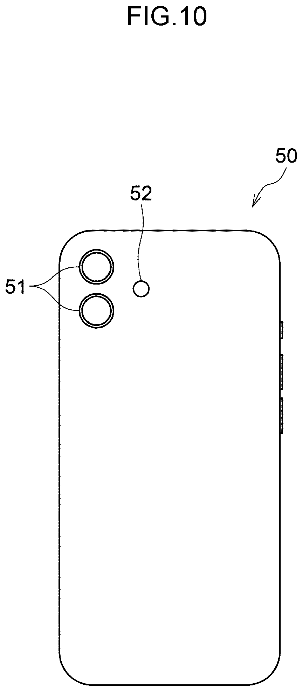

Fig. 6 is an upper perspective view illustrating a placement portion 30 used in the measurement system 10 (see Fig. 11) of the present exemplary embodiment. Moreover, Fig. 7 illustrates the placement portion 30 in bottom view. The placement portion 30 is configured as a paper box having a substantially rectangular parallelepiped shape with an upper surface and a lower surface opened. Four side surfaces of the placement portion 30 form outer wall portions 34 erected vertically. Placement frames 32, which are frames on which a mobile device 50 (see Fig. 10) to be described later is placed, are formed on the upper surface of the placement portion 30. On one side (hereinafter, referred to as a "front side") of the inside of the placement portion 30, a box-shaped light shielding portion 33 is formed in which an upper surface is closed while a window 31 is opened and a lower surface is opened (see Fig. 7).

Here, among the four surfaces of the outer wall portions 34, a surface on a side where the light shielding portion 33 is located is referred to as a front surface 34a, a surface on an opposite side thereof is referred to as a back surface 34b, a surface on a left side when viewed from the front surface 34a is referred to as a left side surface 34c, and a surface on an opposite side thereof is referred to as a right side surface 34d. Moreover, the inside of the placement portion 30 is partitioned by a reinforcing portion 35 parallel to the front surface 34a and the back surface 34b. Furthermore, a rectangular cutout portion 36 is formed at a front lower edge of the left side surface 34c.

(4) Housing

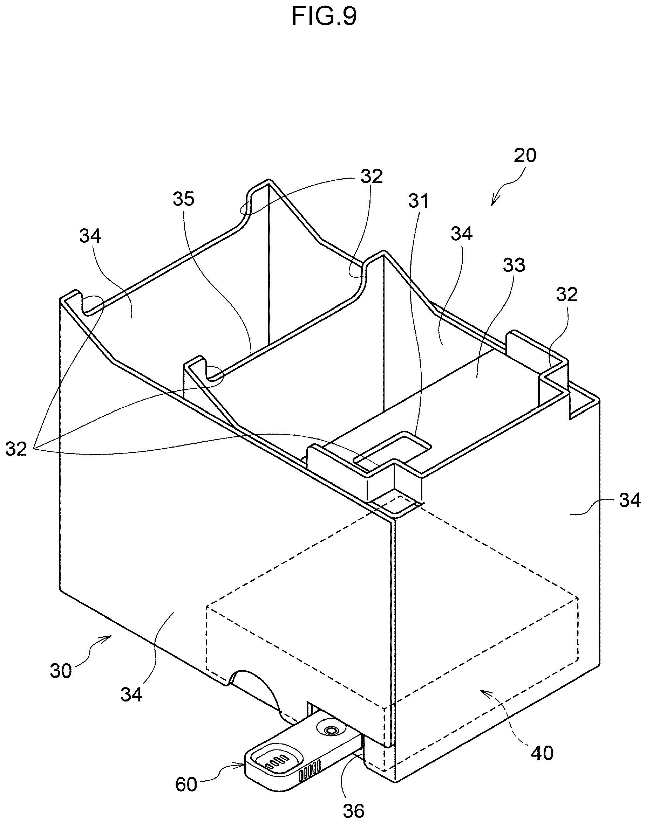

As illustrated in Fig. 7, a gap is formed between a lower edge of the light shielding portion 33 and lower edges of the outer wall portions 34, and a space surrounded by the front surface 34a, the reinforcing portion 35, the left side surface 34c, and the right side surface 34d in four directions with this gap as a height is referred to as an accommodation region 37. When the holding unit 40 is attached to the accommodation region 37, the housing 20 illustrated in Fig. 8 is configured. In this state, the cutout portion 36 of the placement portion 30 and the insertion port 41 of the holding unit 40 coincide with each other. A state in which the test piece 60 is attached to the insertion port 41 in this state as illustrated in Fig. 4 and Fig. 5 is as illustrated in the upper perspective view illustrated in Fig. 9.

(5) Mobile Device

Fig. 10 illustrates the mobile device 50 used in the measurement system 10 (see Fig. 11) of the present exemplary embodiment in a bottom view in a state of being placed on the housing 20. In the present exemplary embodiment, a smartphone is used as the mobile device 50, but a tablet terminal with a camera function may be used as the mobile device 50. On the bottom surface side (so-called back surface) of the mobile device 50, photographing unit 51 configured as a camera and an illumination unit 52 configured as a flash that emits visible light beside the photographing unit is provided. Note that a top surface side (so-called front surface) of the mobile device 50 is a display unit 53.

(6) Measurement System

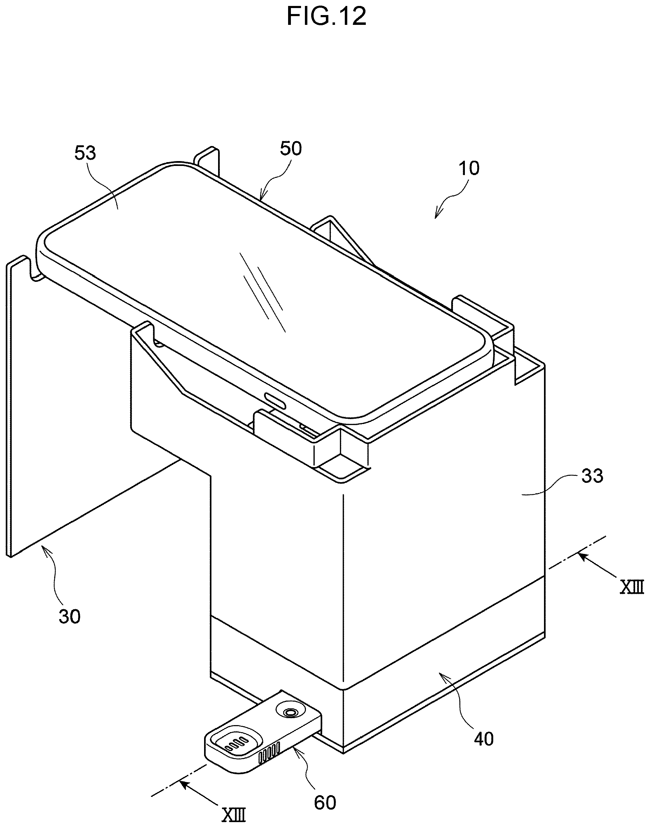

The mobile device 50 illustrated in Fig. 10 is placed inside the placement frames 32 of the housing 20 illustrated in Fig. 9 with the photographing unit 51 and the illumination unit 52 aligned with the window 31 and the display unit 53 facing upward, whereby the measurement system 10 of the present exemplary embodiment as illustrated in the upper perspective view of Fig. 11 is configured. As illustrated in the upper perspective view of Fig. 12 illustrating a state in which the front surface 34a, the left side surface 34c, and the right side surface 34d among the outer wall portions 34 are removed from this state, the measurement opening 43 and the identification opening 44 of the holding unit 40 are covered with the light shielding portion 33, and entry of light from the outside world is prevented.

Moreover, as illustrated in Fig. 13 illustrating a cross section taken along line XIII-XIII in Fig. 12, the measurement opening 43 and the optical filter 45 are located above the measurement region 61 of the test piece 60, and the identification opening 44 is located above the identification region 62. Further, the light source 42 that irradiates the measurement region 61 from obliquely above is installed on a slightly back surface side below the measurement opening 43. More specifically, a light source installation plate 42A is obliquely extended from the lower edge of a back surface wall 46A of the accommodation portion corresponding to the back surface side of the accommodation portion 46 toward a back surface edge 43A of the measurement opening 43. Then, the light source 42 is installed on the lower surface side of the light source installation plate 42A, so that the light source 42 can irradiate the measurement region 61 obliquely (i.e., in the direction perpendicular to the extending direction of the light source installation plate 42A) from the back surface side. The window 31 of the placement portion 30 is located directly above the measurement opening 43, and the photographing unit 51 of the mobile device 50 cover the identification region 62 in addition to the measurement region 61 in the field of view through the window.

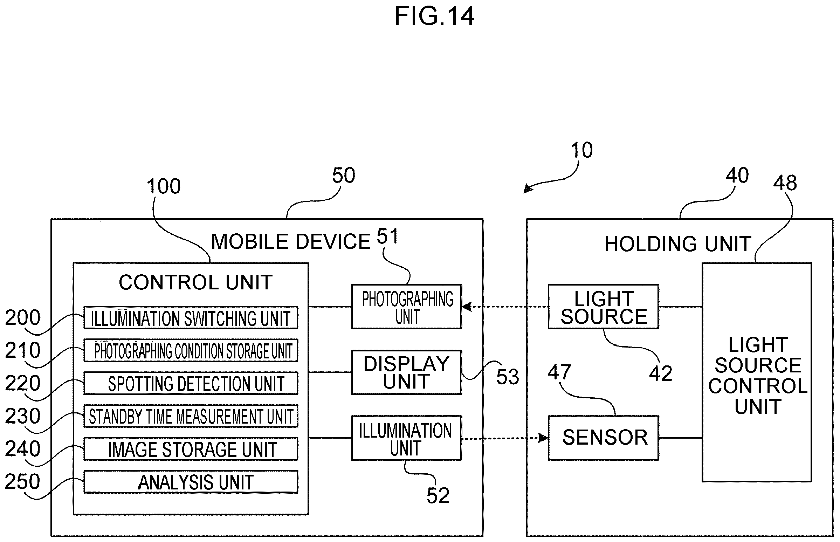

Fig. 14 is a functional block diagram illustrating the measurement system 10 of the present exemplary embodiment. The mobile device 50 is provided with the photographing unit 51 and the illumination unit 52 illustrated in Fig. 10, the display unit 53 illustrated in Fig. 11, and a control unit 100 that controls these units. The control unit 100 functions as the following units by using a CPU 110, a ROM 120, a RAM 130, and a storage device 150 to be described later as hardware resources of a computer.

That is, the control unit 100 functions as an illumination switching unit 200 that switches on/off (turned-on/turned-off) of illumination by the illumination unit 52. Specifically, the illumination switching unit 200 can be realized as an application installed in the mobile device 50, but can also be realized as a unit using electric or optical sensing with the holding unit 40 or as a wireless communication unit (e.g., Bluetooth (registered trademark) or the like) with the holding unit 40. Moreover, the control unit 100 functions as a photographing condition storage unit 210 that stores a photographing condition by the photographing unit 51. The condition defined as the photographing condition includes, for example, a standby time required for the reaction between the measurement object and the reagent. Further, the control unit 100 functions as a spotting detection unit 220 that detects spotting of the sample on the test piece 60 through the photographing unit 51. Moreover, the control unit 100 functions as a standby time measurement unit 230 that measures the standby time. Then, the control unit 100 functions as an image storage unit 240 that stores an image of the measurement region 61 photographed by the photographing unit 51. Furthermore, the control unit 100 functions as an analysis unit 250 that analyzes the image photographed by the photographing unit 51.

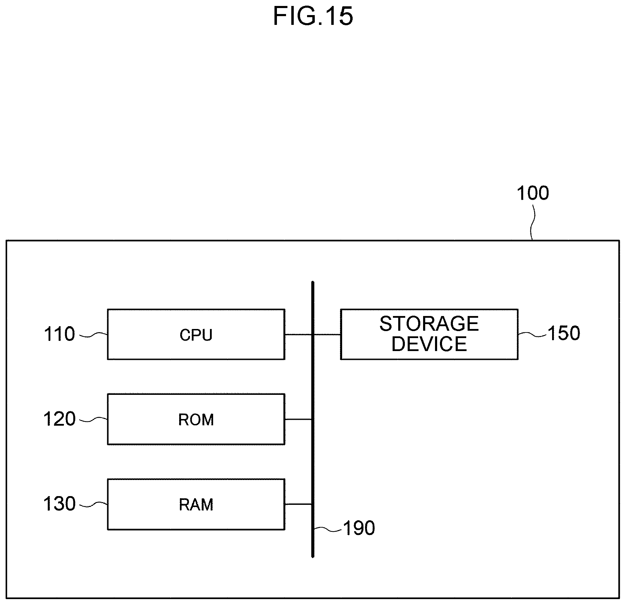

As illustrated in the hardware configuration of Fig. 15, the control unit 100 has the central processing unit (CPU) 110, the read only memory (ROM) 120, the random access memory (RAM) 130, and the storage device 150. The respective components are communicably coupled to each other via a bus 190.

The CPU 110 is a central processing unit, and executes various programs and controls each unit. That is, the CPU 110 reads the program from the ROM 120 or the storage device 150, and executes the program using the RAM 130 as a work area. The CPU 110 controls the measurement system 10 according to the program recorded in the ROM 120 or the storage device 150.

The ROM 120 stores various programs and various data. The RAM 130 temporarily stores programs or data as a work area. The storage device 150 is configured as a storage by a hard disk drive (HDD), a solid state drive (SSD), or a flash memory, and stores various programs including an operating system and various data.

On the other hand, the holding unit 40 includes the light source 42 that irradiates the measurement region 61, the sensor 47 that detects on/off (turned-on/turned-off) of the illumination unit 52, and the light source control unit 48 that turns on the light source 42 when a signal from the sensor 47 is input. Similarly to the control unit 100 of the mobile device 50, the light source control unit 48 is configured as a hardware resource of a computer. Note that the light source control unit 48 can turn on the light source 42 regardless of the input mode of the signal from the sensor 47 (e.g., in a wired or wireless manner) as long as it can perform control to turn on the light source 42 at the time of photographing the measurement region 61 to be described later. Moreover, the light source control unit 48 can also perform control to turn off the light source 42.

As described above, the measurement system 10 of the present exemplary embodiment includes the insertion port 41 into which the test piece 60 having the measurement region 61 and the identification region 62 is inserted, the accommodation portion 46 that accommodates the test piece 60 inserted from the insertion port 41, the housing 20 having the window 31 facing the test piece 60 accommodated in the accommodation portion 46, and the mobile device 50 having the illumination unit 52 that illuminates the identification region 62 of the test piece 60 accommodated in the accommodation portion 46 and the photographing unit 51 that photographs the measurement region 61 and the identification region 62. The housing 20 has the placement portion 30 for placing the mobile device 50 on the outer surface in a state in which the photographing unit 51 and the illumination unit 52 are disposed at a position facing the window 31, the holding unit 40 for holding the test piece 60 accommodated in the accommodation portion 46 therein, and the light source 42 provided at a position for irradiating the measurement region 61 inside the holding unit 40. Then, in the measurement system 10, as described later, the illumination unit 52 is turned off while the light source 42 is turned on when the photographing unit 51 photographs the measurement region 61, and the illumination unit 52 is turned on when the photographing unit 51 photographs the identification region 62. With such a configuration, in the measurement system 10 of the present exemplary embodiment, when there are plural photographing regions (i.e., the measurement region 61 and the identification region 62) in the test piece 60, photographing using an appropriate light source can be performed according to the photographing region.

Here, the control unit 100 functioning as the illumination switching unit 200 that switches on/off (turned-on/turned-off) of illumination by the illumination unit 52 can perform control to turn on the illumination unit 52 at the time of photographing the identification region 62 and to turn off the illumination unit 52 at the time of photographing the measurement region 61. Moreover, the light source control unit 48 can control to turn on the light source 42 at the time of photographing the measurement region 61. Further, from the viewpoint of preventing the light source 42 from being consumed, it is preferable that the light source control unit 48 controls to turn off the light source 42 at the time of photographing the identification region 62.

Here, as described above, the measurement region 61 is a region on the test piece 60 and is a region where the measurement object in the test piece 60 is measured, and the identification region 62 is a region where the identification information of the test piece 60 is recorded. In the measurement region, the measurement object in the sample is detected by color development by a reagent that specifically reacts with the measurement object in the target reaction zone 71, capture of the measurement object by a reagent that specifically binds to the measurement object, or the like. Examples of the identification region 62 include a region to which a barcode, a QR code (registered trademark), or the like is attached. Examples of the identification information recorded in the identification region 62 include a type of the test sheet 64 accommodated in the test piece 60, measurement conditions suitable for the test piece 60, lot information of the test piece 60, and the like. Moreover, the light source 42 is a light source suitable for detecting a measurement obj ect in the measurement region 61. For example, when a substance that reacts with the measurement object in the target reaction zone 71 of the measurement region 61 has absorption in ultraviolet light, appropriate photographing can be performed by using ultraviolet light as the light source 42. Note that, as a result, the light source 42 having a wavelength corresponding to the measurement object can be used to photograph the measurement region 61, and the illumination unit 52 of the mobile device 50 can be used as the light source to photograph the identification region 62.

Note that, when photographing the identification region 62 by the photographing unit 51, it is preferable to turn off the light source 42 while turning on the illumination unit 52. As a result, since the light source 42 can be turned on only when it is necessary to photograph the measurement region 61, it is possible to prevent the light source 42 from being consumed.

(7) Measurement Method of Measurement Object by Measurement System

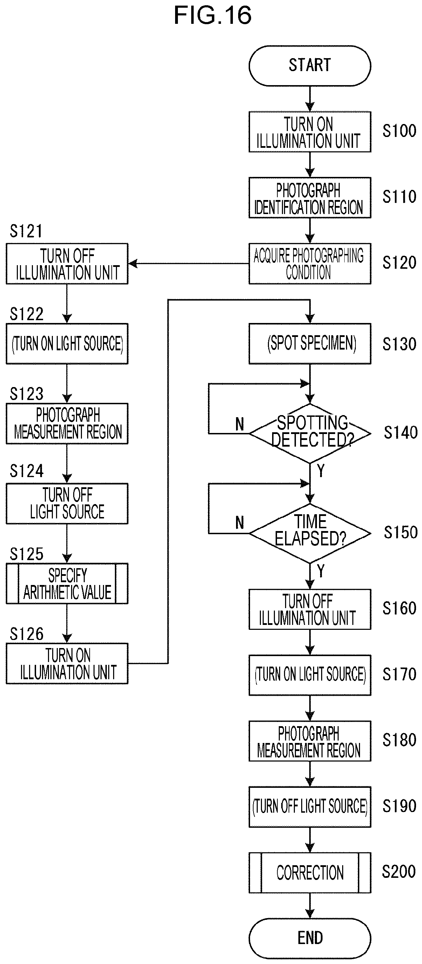

An example of a measurement method of the measurement object by the measurement system 10 of the present exemplary embodiment will be described with reference to a flowchart of Fig. 16. Note that, in this flowchart, an outline of a step indicating an operation other than an operation directly performed by the mobile device 50 is displayed in parentheses.

First, as illustrated in Fig. 11, the measurement system 10 on which the mobile device 50 is placed is prepared in the housing 20 on which the holding unit 40 is attached to the placement portion 30, and the test piece 60 is inserted from the insertion port 41. In this step, when the screen of the display unit 53 (see Fig. 11 and Fig. 14) is operated, an application for measurement installed in the mobile device 50 is activated, and measurement is started.

First, in a step shown in S100, the illumination switching unit 200 (see Fig. 14) turns on the illumination unit 52. In this step, the light source 42 of the holding unit 40 is turned off. Next, in a step shown in S110, the photographing unit 51 photographs the identification region 62 using the illumination unit 52 as a light source. When the photographing is completed, the process proceeds to a step shown in S120.

In the step shown in S120, the control unit 100 refers to the photographing condition storage unit 210 (see Fig. 14) to acquire a photographing condition at the time of measurement by the test piece 60, from the photographed image of the identification region 62.

Next, in a step shown in S121, the illumination switching unit 200 turns off the illumination unit 52. Then, in a step shown in S122, in the holding unit 40, when the light source control unit 48 detects that the illumination unit 52 is turned off through the sensor 47 (see Fig. 1 and Fig. 14), the light source 42 is turned on.

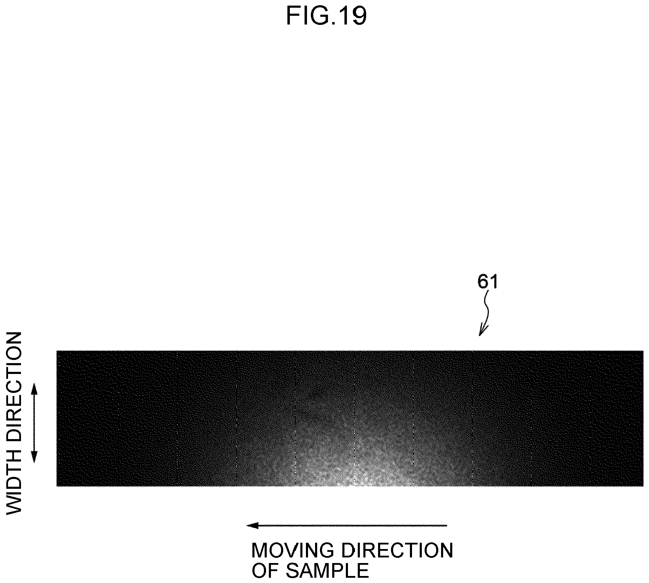

When the light source 42 is turned on, the photographing unit 51 photographs the measurement region 61 illuminated with the measurement light from the light source 42 as a pre-measurement image in a step shown in S123. The measurement region 61 photographed in this step is as illustrated in Fig. 19, for example. In Fig. 19, in the vicinity of the center of the pre-measurement image in the moving direction of the sample, there is light quantity unevenness in which luminescence intensity is the highest in a downward direction (i.e., a position close to the light source 42) in a direction (i.e., in a width direction indicated in Fig. 19 and Fig. 20) orthogonal to the moving direction of the sample, and the luminescence intensity decreases as the distance therefrom increases. Here, the light quantity unevenness means that the intensity of the light from the light source 42 is not uniform in the measurement region 61. When the photographing is completed, the light source control unit 48 of the holding unit 40 turns off the light source 42 in a step shown in S124. Then, the process proceeds to a step shown in S125.

In the step shown in S125, the analysis unit 250 (see Fig. 14) measures luminescence intensity for each of plural measurement sites in the photographed pre-measurement image, and an arithmetic value that equalizes the luminescence intensity of each measurement site is specified for each measurement site. Here, the measurement site is a site defined using the pre-measurement image and the measurement image, and refers to a site where the luminescence intensity is measured based on the pre-measurement image and the measurement image.

For example, the measurement site is preferably set at plural places along the direction in which the sample moves in the image of the measurement region 61 illustrated in Fig. 19 and Fig. 20, that is, the pre-measurement image and the measurement image. The plural places may be sites equally divided along the direction in which the sample moves. Moreover, each pixel of the photographed image may be used as the measurement site along the moving direction of the sample in Fig. 19 and Fig. 20. Furthermore, the luminescence intensity for each measurement site is preferably an average value of the luminescence intensities obtained along the width direction illustrated in Fig. 19 and Fig. 20, but may be represented by luminescence intensity at an arbitrary position (e.g., a center position) in this direction. The same applies to a step shown in S200 described later.

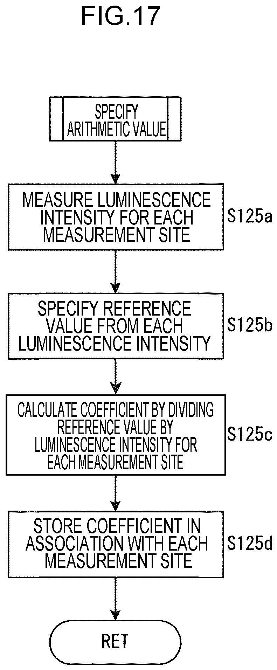

Specifically, in a step shown in S125a of Fig. 17, the analysis unit 250 measures luminescence intensity for each measurement site in the photographed pre-measurement image. Next, in a step shown in S125b, the analysis unit 250 determines a reference value from each luminescence intensity. As the reference value, for example, a maximum numerical value among the numerical values of the luminescence intensities of the measurement sites may be adopted, or a minimum numerical value may be adopted. Alternatively, an average value obtained by averaging the luminescence intensities of the measurement sites may be adopted. Alternatively, any value of luminescence intensity of each measurement site may be selected.

Next, in a step shown in S125c, the analysis unit 250 divides the reference value by the luminescence intensity for each measurement site and specifies a coefficient as an arithmetic value. Then, the coefficient specified is stored in the storage device 150 (see Fig. 15) in association with each measurement site in a step shown in S125d. Then, the process proceeds to a step shown in S126 of Fig. 16, and the illumination switching unit 200 (see Fig. 14) turns on the illumination unit 52 again.

Next, in a step shown in S130, an appropriate amount of sample is spotted to the sample spotting portion 63 (see Fig. 3) of the test piece 60 by a measurer. The spotted sample is developed to the downstream side by the test sheet 64 (see Fig. 3) inside the test piece 60.

During this time, the spotting detection unit 220 of the control unit 100 (see Fig. 14) continues to monitor whether an image (e.g., the control reaction zone 70 generated by the reaction with the measurement object) indicating that spotting is completed is detected in the measurement region 61 through the image from the photographing unit 51 in a step shown in S140. When such an image is detected, the process proceeds to a step shown in S150.

In the step shown in S150, after the detection of the completion of spotting in the step shown in S140, the standby time measurement unit 230 (see Fig. 14) of the control unit 100 continues to monitor whether a standby time required for reaction between the measurement object and the reagent on the test sheet 64 has elapsed, among the photographing condition acquired in the step shown in S120.

When the standby time measurement unit 230 determines that the standby time has elapsed in the step shown in S150, the illumination switching unit 200 turns off the illumination unit 52 in a step shown in S160.

On the other hand, in a step shown in S170, in the holding unit 40, when the light source control unit 48 detects that the illumination unit 52 is turned off through the sensor 47 (see Fig. 1 and Fig. 14), the light source 42 is turned on.

When the light source 42 is turned on, the photographing unit 51 photographs the measurement site including the target reaction zone 71 visualized with the wavelength of the measurement light from the light source 42 in the measurement region 61 as a measurement image in a step shown in S180. When the photographing is completed, the light source control unit 48 of the holding unit 40 turns off the light source 42 in a step shown in S 190. Then, the process proceeds to a step shown in S200.

In the step shown in S200, the analysis unit 250 (see Fig. 14) measures luminescence intensity for each of plural measurement sites in the photographed measurement image, and corrects luminescence intensity of each measurement site with the coefficient of the measurement site.

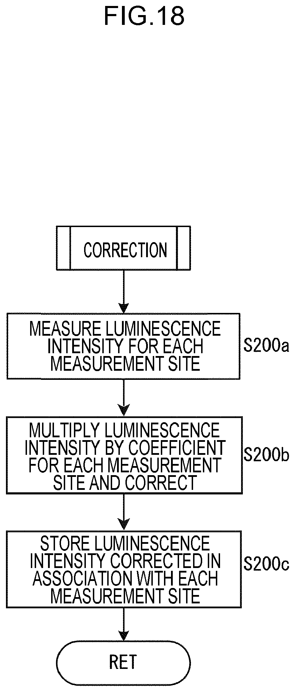

Specifically, in a step shown in S200a in Fig. 18, similarly to the step shown in S125a in the pre-measurement image, the analysis unit 250 measures the luminescence intensity for each measurement site in the photographed measurement image. Next, in a step shown in S200b, the analysis unit 250 multiplies the luminescence intensity by the coefficient corresponding to the measurement site calculated in the step shown in S125c for each measurement site in the measurement image, thereby correcting each luminescence intensity in the measurement image. The corrected luminescence intensity for each measurement site of the measurement image is stored in the storage device 150 (see Fig. 15), and then subjected to calculation of a content of a measurement object, whereby the measurement object is measured.

Note that, in the step shown in S125c of Fig. 17, the analysis unit 250 may divide the luminescence intensity by the reference value for each measurement site to specify the coefficient as the arithmetic value. In this case, in the step shown in S200b of Fig. 18, the analysis unit 250 divides the luminescence intensity by the coefficient corresponding to the measurement site calculated in step shown in S125c for each measurement site in the measurement image, thereby correcting each luminescence intensity in the measurement image.

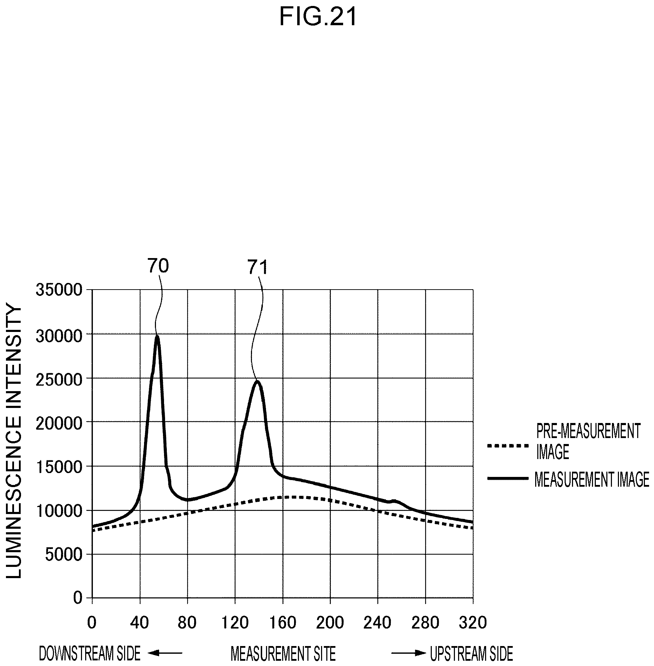

Here, an example of the luminescence intensity, which is unprocessed data that is not corrected with the coefficient in the pre-measurement image and the measurement image, is represented by a graph illustrated in Fig. 21. In Fig. 21, an X-axis indicates each measurement site obtained by dividing the pre-measurement image and the measurement image into 320, and a Y-axis indicates luminescence intensity at each measurement site. Note that, the luminescence intensity is a numerical value representing an optical measurement value measured by the photographing unit 51 of the mobile device 50 as a digital value. A broken line in the drawing indicates luminescence intensity for each measurement site in the pre-measurement image. Moreover, a solid line in the drawing indicates luminescence intensity for each measurement site of the measurement image. The luminescence intensity of the pre-measurement image is maximum in the vicinity of the center of the measurement site. On the other hand, in the luminescence intensity of the measurement image, similarly to the image of Fig. 20, a peak of the control reaction zone 70 is observed closer to the downstream side, and a peak of the target reaction zone 71 is observed closer to the upstream side. However, the luminescence intensity of the measurement image is considered to be a value in which the luminescence intensity at the central portion is higher than the luminescence intensity at a portion other than the central portion as represented by the luminescence intensity of the pre-measurement image. This is considered to be caused by, for example, the light quantity unevenness as illustrated in Fig. 19. Therefore, due to the influence of the light quantity unevenness, there is a possibility that the value of the luminescence intensity of the target reaction zone 71 located in the central portion is represented relatively strongly because the light quantity from the light source is strong. On the other hand, there is a possibility that the value of the luminescence intensity of the control reaction zone 70 located in a portion other than the central portion is represented relatively weakly because the light quantity from the light source is weak.

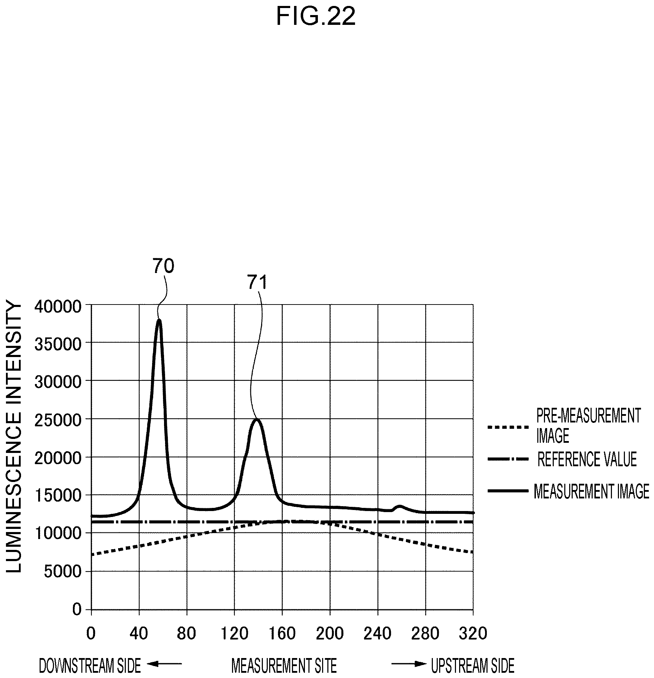

On the other hand, an example of the corrected luminescence intensity in the measurement image is represented by a graph indicated by a solid line in Fig. 22. On the other hand, in the graph of the luminescence intensity of the pre-measurement image in Fig. 21, the maximum luminescence intensity is set as the above-described reference value, and this is illustrated as a graph of a constant value indicated by a one-dot chain line. That is, when the luminescence intensity of the measurement image is corrected with the above-described coefficient so that the graph of the luminescence intensity of the pre-measurement image indicated by the broken line becomes the reference value indicated by the one-dot chain line, the graph indicated by the solid line is obtained. That is, in the graph with both ends lowered in Fig. 21, a baseline is flattened in Fig. 22. In this graph after the correction, it is considered that the light quantity unevenness as illustrated in Fig. 19 is eliminated by arithmetic calculation, and thus the actual state of the luminescence intensity is better represented.

Note that the graph of the luminescence intensity of the pre-measurement image illustrated in Fig. 21 may be approximated by an appropriate function, an arithmetic value may be specified by the function, and the luminescence intensity of the measurement image may be corrected accordingly. That is, when the measurement site on the horizontal axis in Fig. 21 is represented by x and the luminescence intensity on the vertical axis is represented by y, it is assumed that the luminescence intensity of the pre-measurement image indicated by the broken line is approximated by a function of the following Formula 1.

$$y = f(x) \ ... \ (\text{Formula 1})$$

At this time, the arithmetic value at the measurement site x is f (x). Then, in Fig. 21, assuming that the luminescence intensity of the measurement image at the measurement site x is Ax, the corrected luminescence intensity Bx can be obtained by dividing the luminescence intensity by the arithmetic value as in the following Formula 2.

$$Bx = Ax/f(x) \ ... \ (\text{Formula 2})$$

As described above, the measurement system 10 of the present exemplary embodiment is a measurement system in which the test piece 60, to which a reaction reagent is applied and to which a sample including a measurement object that reacts with the reaction reagent is introduced, is disposed in the measurement region 61 inside the measurement system and the test piece 60 is measured, the system including: the light source 42 configured to irradiate the measurement region 61 of the test piece 60 disposed in the measurement region 61 with measurement light; the photographing unit 51 configured to photograph images of the measurement region 61 of the test piece 60; and the analysis unit 250 configured to analyze the image photographed by the photographing unit 51, in which the photographing unit 51 acquires a pre-measurement image by photographing the measurement region 61 of the test piece 60 before the sample is introduced in a state in which the measurement region 61 is irradiated with the measurement light from the light source 42, and acquires a measurement image by photographing the measurement region 61 of the test piece 60 after the sample is introduced in a state in which the measurement region 61 is irradiated with the measurement light from the light source 42, and the analysis unit 250 specifies, for each of plural measurement sites in the pre-measurement image, an arithmetic value that equalizes luminescence intensity of each measurement site, and corrects luminescence intensity for each measurement site in the measurement image corresponding to each measurement site in the pre-measurement image based on the arithmetic value.

Moreover, a measurement method can be executed by the measurement system 10 according to the present exemplary embodiment, the method including: photographing a pre-measurement image in a state in which the test piece 60, to which a reaction reagent is applied and to which a sample including a measurement object that reacts with the reaction reagent is introduced, is irradiated with measurement light in the measurement region 61 of the test piece 60 before the sample is introduced; measuring luminescence intensity for each of plural measurement sites in the photographed pre-measurement image; specifying an arithmetic value that equalizes the luminescence intensity of each measurement site in the pre-measurement image for each measurement site; photographing a measurement image in a state in which the measurement region 61 of the test piece 60 after the sample is introduced is irradiated with the measurement light; measuring the luminescence intensity for each measurement site corresponding to each measurement site of the pre-measurement image in the photographed measurement image; and correcting luminescence intensity of each measurement site in the measurement image with the arithmetic value of the measurement site.

In the above exemplary embodiment, as illustrated in Fig. 11, every time the mobile device 50 is attached on the placement portion 30, the positions of the placement portion 30 and the mobile device 50 may be slightly shifted. Accordingly, the relative position between the photographing unit 51 of the mobile device 50 and the measurement region 61 of the test piece 60 is slightly shifted. That is, the distribution of the measurement light with which the measurement region 61 is irradiated may be slightly different every time the mobile device 50 is attached to the placement portion 30. Therefore, the light quantity unevenness as illustrated in Fig. 19 is not always photographed in the same manner every time. However, when the mobile device 50 is once attached on the placement portion 30 and the pre-measurement image and the measurement image are photographed without moving the mobile device 50 from that state, the light quantity unevenness occurring in the measurement region is the same, and thus the shift of the attachment position of the mobile device 50 does not affect the correction of the luminescence intensity. Therefore, a special work for calibration for correcting the luminescence intensity is unnecessary, and the light quantity unevenness can be corrected in cooperation with the measurement of the test piece 60. As a result, the labor of a user is simplified, the cost can be reduced, and the objectivity of the correction of the light quantity unevenness is improved.

(8) Others

In the measurement system 10 of the above exemplary embodiment, the housing 20 is formed by combining the separate holding unit 40 with the placement portion 30, but the housing 20 may have a structure in which the placement portion 30 and the holding unit 40 are integrated. In this case, the housing 20 is provided with the insertion port 41, and a space provided at the back serves as the accommodation portion 46. Then, the test piece 60 is inserted from the insertion port 41, and the measurement region 61 and the identification region 62 of the test piece 60 accommodated in the accommodation portion 46 are used for photographing by the photographing unit 51 of the mobile device 50 as in the above-described exemplary embodiment.

Moreover, the test piece 60 has a structure in which the test sheet 64 is accommodated inside the test piece 60 as described in the above exemplary embodiment, but, for example, the test sheet 64 itself such as a urine test sheet may be used as the test piece 60. In this case, not only the measurement region 61 but also the identification region 62 is provided on the test sheet 64 as the test piece 60. Moreover, in this case, as the material of the test sheet 64, as described in the above exemplary embodiment, a water absorbent such as a filter sheet or one obtained by applying a water absorbing layer to the surface of a synthetic resin substrate can be used.

Industrial Applicability

The invention can be used for a measurement system that develops a measurement object in a sample with a test piece and optically detects the measurement object.

**Claims**

1.   A measurement method comprising:

    photographing a pre-measurement image in a state in which a test piece (60), to which a reaction reagent is applied and to which a sample including a measurement object that reacts with the reaction reagent is introduced, is irradiated with measurement light in a measurement region (61) of the test piece (60) before the sample is introduced;
    measuring luminescence intensity for each of a plurality of measurement sites in the photographed pre-measurement image;
    specifying an arithmetic value that equalizes the luminescence intensity of each measurement site in the pre-measurement image for each measurement site;
    photographing a measurement image in a state in which the measurement region (61) of the test piece (60) after the sample is introduced is irradiated with the measurement light;
    measuring luminescence intensity for each measurement site corresponding to each measurement site of the pre-measurement image in the photographed measurement image; and
    correcting the luminescence intensity of each measurement site in the measurement image with the arithmetic value of the measurement site.

2.   The measurement method according to claim 1, wherein the plurality of measurement sites are set along a direction in which the sample introduced in the test piece (60) moves.

3.   The measurement method according to claim 2, wherein the arithmetic value is specified based on an average value of luminescence intensities obtained along a direction orthogonal to the direction in which the sample moves in each of the measurement sites.

4.   A measurement system (10) in which a test piece (60), to which a reaction reagent is applied and to which a sample including a measurement object that reacts with the reaction reagent is introduced, is disposed in a measurement region (61) inside the measurement system (10) and the test piece (60) is measured, the measurement system (10) comprising:

    a light source (42) configured to irradiate a measurement region (61) of the test piece (60) disposed in the measurement region (61) with measurement light;
    a photographing unit (51) configured to photograph an image of the measurement region (61) of the test piece (60); and
    an analysis unit (250) configured to analyze the image photographed by the photographing unit (51), wherein:

        the photographing unit (51) acquires a pre-measurement image by photographing the measurement region (61) of the test piece (60) before the sample is introduced in a state in which the measurement region (61) is irradiated with the measurement light from the light source (42), and acquires a measurement image by photographing the measurement region (61) of the test piece (60) after the sample is introduced in a state in which the measurement region (61) is irradiated with the measurement light from the light source (42), and
        the analysis unit (250) specifies, for each of a plurality of measurement sites in the pre-measurement image, an arithmetic value that equalizes luminescence intensity of each measurement site, and corrects luminescence intensity for each measurement site in the measurement image corresponding to each measurement site in the pre-measurement image based on the arithmetic value.

5.   The measurement system (10) according to claim 4, wherein the plurality of measurement sites are set along a direction in which the sample introduced in the test piece (60) moves.

6.  The measurement system (10) according to claim 5, wherein the arithmetic value is specified based on an average value of luminescence intensities obtained along a direction orthogonal to the direction in which the sample moves in each of the measurement sites.

7.  The measurement system (10) according to any one of claims 4 to 6, further comprising:

    a mobile device (50) having a camera as the photographing unit (51);
    a housing (20) configured to hold the mobile device (50); and
    a holding unit (40) into which the test piece (60) is inserted, the holding unit (40) being provided with the light source (42) and attached to the housing (20),
    wherein a central processing unit (110) of the mobile device (50) functions as the analysis unit (250).

# FIG.1

# FIG.2

FIG.3

FIG.4

# FIG.5

# FIG.6

# FIG.7

# FIG.8

# FIG.9

# FIG.10

# FIG.11

# FIG.12

# FIG.13

# FIG.14

FIG.15

# FIG.16

```
                                    ┌─────────────┐
                                    │    START    │
                                    └──────┬──────┘
                                           │
                                    ┌──────▼──────────┐
                                    │    TURN ON      │  S100
                                    │ ILLUMINATION UNIT│
                                    └──────┬──────────┘
                                           │
                                    ┌──────▼──────────┐
                                    │   PHOTOGRAPH    │  S110
                                    │IDENTIFICATION REGION│
                                    └──────┬──────────┘
                                           │
   S121                              ┌──────▼──────────┐
┌──────────────────┐                 │ACQUIRE PHOTOGRAPHING│  S120
│    TURN OFF      │◄────────────────│    CONDITION    │
│ ILLUMINATION UNIT│                 └──────┬──────────┘
└──────┬───────────┘                        │
   S122 │                                   │
┌──────▼───────────┐                 ┌──────▼──────────┐
│(TURN ON LIGHT SOURCE)│             │ (SPOT SPECIMEN) │  S130
└──────┬───────────┘                 └──────┬──────────┘
   S123 │                                   │
┌──────▼───────────┐              ┌──────►──▼──────────┐
│   PHOTOGRAPH     │            N │      SPOTTING      │  S140
│ MEASUREMENT REGION│◄────────────┤     DETECTED?      │
└──────┬───────────┘              └─────────┬──────────┘
   S124 │                                 Y │
┌──────▼───────────┐              ┌──────►──▼──────────┐
│    TURN OFF      │            N │        TIME        │  S150
│  LIGHT SOURCE    │◄────────────┤     ELAPSED?       │
└──────┬───────────┘              └─────────┬──────────┘
   S125 │                                 Y │
┌──────▼───────────┐                 ┌──────▼──────────┐
│     SPECIFY      │                 │    TURN OFF     │  S160
│ ARITHMETIC VALUE │                 │ ILLUMINATION UNIT│
└──────┬───────────┘                 └──────┬──────────┘
   S126 │                                   │
┌──────▼───────────┐                 ┌──────▼──────────┐
│    TURN ON       │                 │(TURN ON LIGHT SOURCE)│ S170
│ ILLUMINATION UNIT│─────────────────└──────┬──────────┘
└──────────────────┘                        │
                                     ┌──────▼──────────┐
                                     │   PHOTOGRAPH    │  S180
                                     │ MEASUREMENT REGION│
                                     └──────┬──────────┘
                                            │
                                     ┌──────▼──────────┐
                                     │(TURN OFF LIGHT SOURCE)│ S190
                                     └──────┬──────────┘
                                            │
                                     ┌──────▼──────────┐
                                     │   CORRECTION    │  S200
                                     └──────┬──────────┘
                                            │
                                     ┌──────▼──────┐
                                     │     END     │
                                     └─────────────┘
```

# FIG.17

SPECIFY
ARITHMETIC VALUE

MEASURE LUMINESCENCE
INTENSITY FOR EACH
MEASUREMENT SITE — S125a

SPECIFY REFERENCE
VALUE FROM EACH
LUMINESCENCE INTENSITY — S125b

CALCULATE COEFFICIENT BY DIVIDING
REFERENCE VALUE BY
LUMINESCENCE INTENSITY FOR
EACH MEASUREMENT SITE — S125c

STORE COEFFICIENT IN
ASSOCIATION WITH EACH
MEASUREMENT SITE — S125d

RET

# FIG.18

```
        ┌──┬─────────────┬──┐
        │  │ CORRECTION  │  │
        └──┴─────────────┴──┘
                  │
                  ▼
    ┌───────────────────────────┐
    │   MEASURE LUMINESCENCE    │
    │    INTENSITY FOR EACH     │  S200a
    │     MEASUREMENT SITE      │
    └───────────────────────────┘
                  │
                  ▼
    ┌───────────────────────────┐
    │   MULTIPLY LUMINESCENCE   │
    │  INTENSITY BY COEFFICIENT │  S200b
    │  FOR EACH MEASUREMENT     │
    │     SITE AND CORRECT      │
    └───────────────────────────┘
                  │
                  ▼
    ┌───────────────────────────┐
    │    STORE LUMINESCENCE     │
    │  INTENSITY CORRECTED IN   │  S200c
    │  ASSOCIATION WITH EACH    │
    │     MEASUREMENT SITE      │
    └───────────────────────────┘
                  │
                  ▼
            ╭───────────╮
            │    RET    │
            ╰───────────╯
```

# FIG.19

FIG.20

WIDTH DIRECTION

70

71

61

MOVING DIRECTION
OF SAMPLE

# FIG.21

# FIG.22

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/095831 A1 (EHRENKRANZ JOEL R L [US]) 30 March 2023 (2023-03-30) <br> * paragraph [0006] * <br> * paragraph [0009] - paragraph [0010] * <br> * paragraph [0043] - paragraph [0044] * <br> * paragraph [0069] * <br> * paragraph [0075] * <br> * paragraph [0083] * <br> * paragraph [0094] * <br> * figure 5A * | 1-7 | INV. <br> G01N21/84 |
| X <br> A | WO 2017/059103 A1 (NIMA LABS INC [US]) 6 April 2017 (2017-04-06) <br> * paragraphs [0002], [0070], [0106], [0110], [0128] * <br> * figures 9A-C * | 1-6 <br><br> 7 | |
| X <br> A | WO 2021/183458 A2 (BERKELEY LIGHTS INC [US]) 16 September 2021 (2021-09-16) <br> * page 1, lines 4-6, 13-17, 31, 32 * <br> * page 90, lines 12-17 * <br> * page 90, line 29 - page 91, line 1 * <br> * figure 3C * | 1-6 <br><br> 7 | TECHNICAL FIELDS SEARCHED (IPC) <br><br> G01N |
| A | US 2013/203627 A1 (MOLL KEVIN D [US] ET AL) 8 August 2013 (2013-08-08) <br> * paragraph [0003] * <br> * paragraph [0250] * <br> * paragraph [0255] - paragraph [0257] * <br> * paragraph [0263] * <br> * paragraph [0313] * <br> * figures 1,2 * | 1-7 | |

The present search report has been drawn up for all claims

| Place of search | Date of completion of the search | Examiner |
|---|---|---|
| Berlin | 2 October 2024 | Navas Montero, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 4489

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2024

| Patent document cited in search report | | Publication date | Patent family member(s) | | Publication date |
|---|---|---|---|---|---|
| US 2023095831 | A1 | 30-03-2023 | NONE | | |
| WO 2017059103 | A1 | 06-04-2017 | NONE | | |
| WO 2021183458 | A2 | 16-09-2021 | AU | 2021235901 A1 | 06-10-2022 |
| | | | CA | 3170874 A1 | 16-09-2021 |
| | | | CN | 115516318 A | 23-12-2022 |
| | | | EP | 4118438 A2 | 18-01-2023 |
| | | | IL | 296312 A | 01-11-2022 |
| | | | JP | 2023517583 A | 26-04-2023 |
| | | | KR | 20220166788 A | 19-12-2022 |
| | | | TW | 202201008 A | 01-01-2022 |
| | | | US | 2023251268 A1 | 10-08-2023 |
| | | | WO | 2021183458 A2 | 16-09-2021 |
| US 2013203627 | A1 | 08-08-2013 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002039094 A1
- JP 2014190926 A
- JP H7332935 A
- JP 2022506376 A
- JP 2023503863 A